# EUROPEAN PATENT SPECIFICATION

(11) **EP 3 043 903 B1**
(45) Date of publication and mention of the grant of the patent: **06.04.2022**
(21) Application number: 14841898.1
(22) Date of filing: 09.09.2014
(51) Int. Cl.: B01J 20/281, B01J 20/289, B01J 20/28, B01D 15/38, B01J 20/32, C08G 81/00

(54) **PROCESS AND SYSTEM FOR MAGNETIC SEPARATION**
VERFAHREN UND SYSTEM FÜR MAGNETISCHE TRENNUNG
PROCÉDÉ ET SYSTÈME POUR SÉPARATION MAGNÉTIQUE

(30) Priority: 09.09.2013 SE 1351038; 20.02.2014 SE 1450206
(43) Date of publication of application: 20.07.2016
(73) Proprietor: Lab-on-a-Bead AB, 413 90 Göteborg (SE)
(72) Inventor: OSCARSSON, Sven, S-753 11 Uppsala (SE); ERIKSSON, Kristofer, S-64592 Strängnäs (SE); ERIKSSON, Per-Olov, S-645 91 Strängnäs (SE)
(74) Representative: Ström & Gulliksson AB
(86) International application number: PCT/SE2014/051036
(87) International publication number: WO 2015/034428

(56) References cited:
- WO-A1-2013/187831
- WO-A2-2006/017428
- WO-A2-2009/151490
- CN-A- 102 703 411
- US-A- 4 861 705
- US-A- 5 110 624
- DRENKOVA-TUHTAN ASYA ET AL: "Phosphate recovery from wastewater using engineered superparamagnetic particles modified with layered double hydroxide ion exchangers", WATER RESEARCH, vol. 47, no. 15, 1 July 2013 (2013-07-01), pages 5670-5677, XP028726171, ISSN: 0043-1354, DOI: 10.1016/J.WATRES.2013.06.039 -& ASYA DRENKOVA-TUHTAN ET AL: "Supplementary Information to "Phosphate recovery from wastewater using engineered superparamagnetic particles modified with layered double hydroxide ion exchangers"", WATER RESEARCH., vol. 47, no. 15, 1 July 2013 (2013-07-01), pages 5670-5677, XP055362665, NL ISSN: 0043-1354, DOI: 10.1016/j.watres.2013.06.039
- TRINE L. MAURY ET AL: "Use of high-gradient magnetic fishing for reducing proteolysis during fermentation", BIOTECHNOLOGY JOURNAL, vol. 7, no. 7, 14 February 2012 (2012-02-14), pages 909-918, XP055362718, DE ISSN: 1860-6768, DOI: 10.1002/biot.201100376
- MATTHIAS FRANZREB ET AL: "Protein purification using magnetic adsorbent particles", APPLIED MICROBIOLOGY AND BIOTECHNOLOGY, SPRINGER, BERLIN, DE, vol. 70, no. 5, 1 May 2006 (2006-05-01), pages 505-516, XP019332155, ISSN: 1432-0614, DOI: 10.1007/S00253-006-0344-3
- IVO SAFARIK ET AL.: 'Large-scale separation of magnetic bioaffinity adsorbents' BIOTECHNOLOGY LETTERS vol. 23, 2001, pages 1953 - 1956, XP055325745
- 'Magnetic particles for the separation and purification of nucleic acids' APPL MICROBIOL BIOTECHNO L vol. 73, 2006, pages 495 - 504, XP055131453

## Description

### Technical field

The present description relates generally to a novel process, devices and systems for the separation of molecules and cells where magnetic filters and magnetic particles with high capacity and/or affinity for said molecules are the main components. This process and corresponding devices and systems are useful in chemical and biochemical processes where one or more reactants, for example catalysts or enzymes, are bound to solid media, as in chemical and biochemical synthesis, and in various purification steps.

The process, devices and systems are also applicable to the removal and/or enrichment of desired or unwanted components, for example but not limited to the removal of drug residues, heavy metals or other unwanted contaminants from drinking water, and the enrichment of intermediary products and end products in chemical and biochemical synthesis, production and recovery.

### Background

Techniques for the separation of low or high molecular weight compounds, biomolecules and cells are of crucial importance in many technological applications, such as but not limited to biopharmacy and biotechnology, including food technology and water purification. A very large number of chromatographic media and chromatographic devices and systems are available. For instance chromatographic processes based on bioaffinity have been used for more than 50 years. One important bioaffinity system is the immobilized Protein A by which immunoglobulins will interact exhibiting biospecific interaction. This makes it possible to isolate monoclonal antibodies in a very efficient fashion.

The most frequently used separation technique today is a chromatographic technique where the separation media is packed in a cylinder and connected to a chromatographic system which makes it possible to isolate the molecules of interest. One of several disadvantages with this technique is the process time. Not only does the separation itself take considerable time, it is also time-consuming to set up the chromatographic system. Extra steps such as filtration, centrifugation and clarification processes are often a must before the material to be separated can be applied to the column. The instruments and the equipment are expensive and require time to set up. Further, expert knowledge and experience is needed to be able to handle the system and to evaluate the results.

Alternatives exist and the use of magnetic particles is one of them.

United States Patent Serial Number 6,623,655 discloses a method for the preparation of a metal chelating compound.

Zhao at al. in Lab Chip, 2009, 9, 2981-2986 describe a technology to manufacture particles with a compartment intended for cells and a compartment with magnetic nanoparticles.

United States Patent Serial Number 4,438,179 describes a polymer particle having magnetic particles bound to its surface. The magnetic material is bonded with a layer of a bonding polymer comprising functional groups which functional groups are ionic or capable of forming a metal chelate or complex. Alternatively the magnetic material is bonded by a polyethylene glycol and/or a polypropylene glycol.

International Publication WO 2012/015891 discloses a particle which may be porous with smaller inorganic particles on its surface. The particle is presented as a toner particle for printers.

GB 1577930 discloses adsorptive particles and magnetic particles embedded in a porous polymer matrix. The porosity of the matrix is such as to allow only molecules up to a certain molecular weight to penetrate into the interstices of the matrix, so that the product selectively adsorbs dissolved substances out of solution. The compounded materials, especially in the form of pearls, are especially useful in the food industry e.g. to separate unwanted trace flavors from various food products or to recover useful materials such as vitamins from various products. Particular applications include removal of bitter isohumulones from concentrated yeast extracts; and recovery of riboflavine from whey. The particles containing the selectively adsorbed substance are easily separated from the medium due to their magnetic properties and thus overcome separation problems encountered with prior art adsorptive materials of this type. The adsorptive particles may be e.g., of carbon, Al2O3, silica gel, activated Mg silicate, clays, etc. The magnetic particles may be e.g., of magnetite, gamma-Fe2O3, ferrites, etc. The porous matrix may be e.g. PVC, polyacrylamide (optionally crosslinked with epichlorhydrin) phenolic resins, nylon-6, 6 crosslinked with HCHO, etc.

United States Patent Serial Number 8,518,265 concerns a functional powder comprising magnetic particles, and hydrophobic groups and hydrophilic groups provided on the surfaces of the magnetic particles; where the number (M) of the hydrophobic groups and the number (N) of the hydrophilic groups satisfy the condition of M/N is 0.2-0.8. An independent claim is included for water treatment method (for example treatment of wastewater such as industrial wastewater) involving dispersing the functional powder in water containing impurities so that the powder having adsorbed the impurities from the water by use of magnetic force.

A. Drenkova-Tuhtan et al. Water Research, volume 47 (2013), pages 5670-5677 discloses a nanocomposite material of superparamagnetic microparticles modified with layered double hydroxide ion exchangers useful for the recovery of phosphate from wastewater.

Most of the commercially available magnetic particles are solid particles with a limited capacity which makes them useful mainly for isolation of molecules in a small scale. For large scale isolation the capacity will be too low to be of commercial interest. Porous magnetic particles with a large inner surface area (5 m² per ml of particles, see for example Protein Purification, Principles, High resolution Methods and Applications, by J.C.Janson and L.Ryden, VCH Publicers Inc.1989, page 40) however make it possible to develop alternatives to traditional chromatographic techniques.

Considering the above, it still remains a problem to apply chromatographic techniques in large scale applications, and there is a need for improved particles as well as a process, devices and unit operations for handling chromatographic particles in large scale applications.

A novel process, devices and systems are described herein in which magnetic filters are combined with high capacity magnetic particles allowing more or less automatic separation process for molecules and cells to be developed and optimized.

### Summary

It is an object of the general concept and embodiments set out herein to alleviate at least some of the disadvantages of the prior art and to provide an improved novel process for separation of molecules, preferably for large scale processes, and most preferably large scale continuous or semi-continuous processes, based on the use of magnetic particles.

A first aspect is a process for large scale separation of molecules according to claim 1.

The particles can be chosen from commercially available particles provided that these have the required magnetic properties and sufficient specific surface area, or preferably magnetic particles produced as disclosed herein.

According to an embodiment of said first aspect, the porous magnetic particle comprises a material selected from the group consisting of agarose, silica, cellulose, poly vinyl alcohols, polyethylene glycols, polystyrene, dextran and acrylates.

According to another embodiment of said first aspect, freely combinable with the above, the porous magnetic particle carries functional groups including at least one selected from the group consisting of -SH, -S-S-pyridin, -COOH, -NH2, -CHO, -OH, phenol, anhydride, epoxy, S-Au, amide, aminoethyl, dietylaminethyl, quaternary aminoethyl, carboxymethyl, phospho and sulphopropyl. These functional groups are suitable for the manufacture of magnetic particles, as they facilitate the coupling of magnetic ions, such as Fe and Ni to the particles. These functional groups can also be useful in different processes for separation, for example ion exchange.

According to a further embodiment, not according to the invention, freely combinable with the above, the functional groups include at least one group which is the result of a reaction with at least one compound selected from the group consisting of divinylsulfone, benzoquinone, imidazol, periodate, trichloro-S-triazine, tosylates, diazonium, isourea salts, carbodiimides, hydrazine, epichlorohydrin, glutaraldehyd, cyanogenbromide, bisepoxiranes, carbonyldiimidazol, N-hydroxysuccinimid, silanes and derivatives thereof.

According to a further embodiment, freely combinable with the above, the functional groups include at least one group selected from the group consisting of IDA (Iminodiacetate) and derivatives thereof, (Iminodiacetate), TED (tris(carboxymethyl) ethylenediamine), CM-Asp (carboxymetylated aspartic acid), NTA (nitrilotriacetic acid), TREN (tris( 2 - aminoetyl) amine), DPA (dipicolylamine), hexylsulfido groups, and EDTA (ethylenediamine tetraacetate). These functional groups are useful for example in applications involving hydrophobic interaction and immobilized metal affinity chromatography (IMAC).

According to yet a further embodiment, freely combinable with the above, the functional groups comprise at least one group selected from the group consisting of CnHm (1≤n≤20 4≤m≤42), phenol, thiophenol and mercaptopyridine. These groups are useful in applications involving for example hydrophobic separation and mixed mode separation.

According to a further embodiment, freely combinable with the above, the molecules adapted for molecular interaction is at least one selected from the group consisting of a protein, an antigen, an enzyme, an enzyme inhibitor, a cofactor, a hormone, a toxin, a vitamin, a glycoconjugate, a nucleic acid, and a carbohydrate. These groups are useful in applications involving, for example, bioaffinity based separation.

According to a further embodiment, freely combinable with the above, said magnetic separation device comprises a flow channel or a container, and wherein the magnetic element is applied to the outside of said channel or container.

According to a further embodiment, freely combinable with the above, said magnetic separation device comprises a container, and wherein a hollow object is introduced into the mixture in said container, wherein said hollow shape has an exterior surface in contact with the mixture, and an interior volume into which a magnetic element is removably inserted

According to a further embodiment, freely combinable with the above, said magnetic separation device comprises a flow channel, and wherein the magnetic element is applied to the outside of the flow channel.

A second aspect is a system for large scale separation of molecules according to claim 11.

According to another embodiment, freely combinable with the above, the system further comprises an optical density sensor for optical density monitoring.

According to a further embodiment, freely combinable with the above, the system further comprises a gas inlet for pressurizing the system with an inert gas.

According to either of the two aspects of the invention, the process and/or the system, the porous magnetic particles are particles, having an exterior surface, pores and a connected interior surface defined by said pores, said particles comprising at least one polymer, functional groups on said exterior and interior surfaces, and magnetic particles covalently bound to the interior surface and/or the exterior surface of said particles.

In a further embodiment, the porous magnetic particle comprises a material selected from the group consisting of agarose, silica, cellulose, poly vinyl alcohols, polyethylene glycols, polystyrene, dextran and acrylates. dextran, acrylates and derivatives thereof.

In another embodiment, the magnetic porous particles have a density which is higher than the density of the porous particle without the covalently bound magnetic particles.

In another embodiment, freely combinable with the above, the functional groups on the exterior and/or interior surfaces of the magnetic porous particle are selected from the group consisting of -SH, -S-S-pyridin, -COOH, -NH₂, -CHO, -OH, phenol, anhydride, epoxy, S-Au, amide, aminoethyl, dietylaminethyl, quaternary aminoethyl, carboxymethyl, phospho and sulphopropyl.

In another embodiment, not according to the invention, freely combinable with the above, the functional groups on the exterior and/or interior surfaces of the particle, preferably a magnetic porous particle, include at least one group which is the result of a reaction with at least one compound selected from the group consisting of divinylsulfone, benzoquinone, imidazol, periodate, trichloro-S-triazine, tosylates, diazonium, isourea salts, carbodiimides, hydrazine, epichlorohydrin, glutaraldehyd, cyanogenbromide, bisepoxiranes, carbonyldiimidazol, N-hydroxysuccinimid, silanes, and derivatives thereof.

In another embodiment, freely combinable with the above, the functional groups on the surface of the porous magnetic particles include at least one which is the result of a reaction with at least one compound selected from the group consisting of divinylsulfone, benzoquinone, imidazol, periodate, trichloro-S- triazine, tosylates, diazonium, isourea salts, carbodiimides, hydrazine, epichlorohydrin, glutaraldehyd, cyanogenbromide, bisepoxiranes, carbonyldiimidazol, N-hydroxysuccinimid, silanes and derivatives thereof.

In another embodiment, freely combinable with the above, molecules adapted for molecular interactions are introduced on magnetic porous particles, adapted for molecular interaction being at least one selected from the group consisting of a protein, an antigen, an enzyme, an enzyme inhibitor, a cofactor, a hormone, a toxin, a vitamin, a glycoconjugate, a nucleic acid, and a carbohydrate.

The particles according to aspects and embodiments described herein have an increased binding capacity compared to known magnetic particles. The binding capacity is maintained and/or even improved by formation of a particle leaving the main part of the inner volume of the porous particle unaffected and available to adsorption and binding reactions with the component to be separated.

Yet another advantage is that the process can be performed with very few steps. The process is easier to perform compared to process according to the prior art. Further features and advantages will become evident in the detailed description and examples.

### Brief description of the drawings

Aspects and embodiments will be described in closer detail in the description and example with reference to the following drawings in which the magnetic porous particles illustrate magnetic porous particles in general, and are not limited to those examples of porous magnetic particles given in the description and examples:

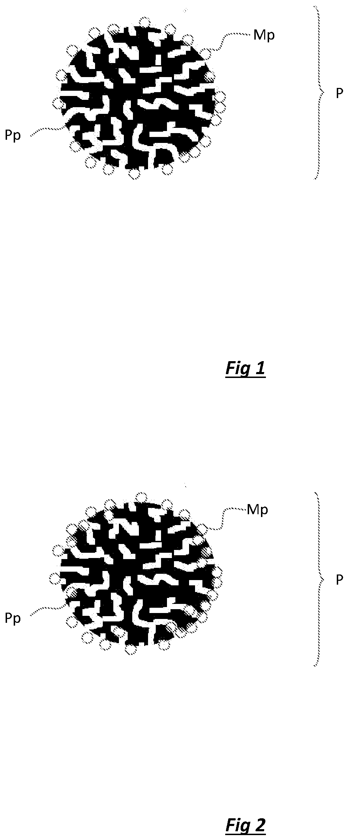

Figure 1 schematically shows a cross-section of a particle (P) comprising a porous non-magnetic particle (Pp) and multiple magnetic particles (Mp) distributed over its surface and covalently bound thereto.
Figure 2 schematically shows the cross-section of a similar particle (P) comprising a non-magnetic porous particle (Pp) with magnetic particles (Mp) which, depending on their size in relation to the diameter of the pores in the porous particle, have penetrated to a lesser or greater extent into said particle, are in contact with the inner and outer surfaces and covalently bound thereto.

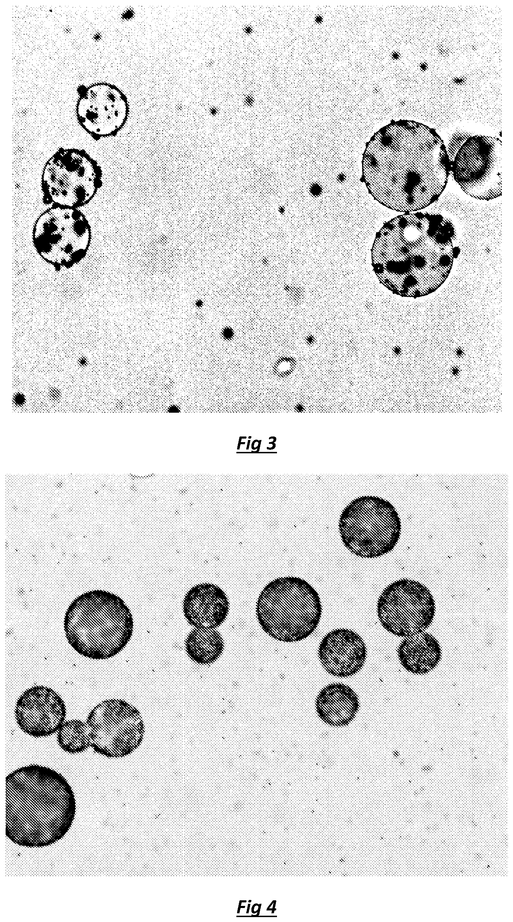

Figure 3 shows an optical microscope image of agarose beads as porous particles with smaller magnetic particles bound to their surface, resulting from a reaction between epoxide-activated agarose and Micromer^{®} M NH₂ particles having the sizes 10 µm, 5 µm and 2 µm.
Figure 4 shows an optical microscope image of magnetic agarose particles resulting from the reaction between epoxide-activated agarose and 2 µm Micromer^{®} M NH2 particles (micromod Partikeltechnologie GmbH, Rostock, Germany).

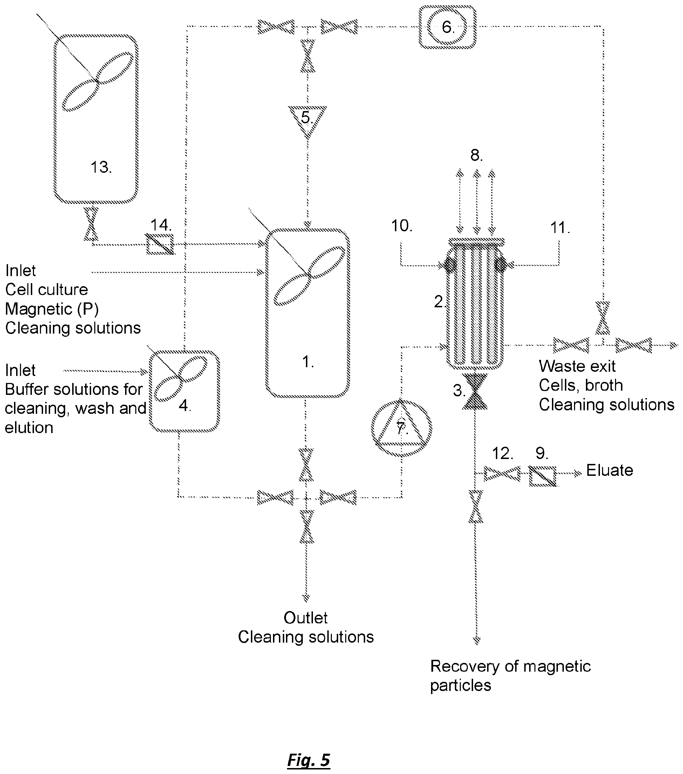

Figure 5 schematically shows a process scheme including the following components: a cell culture tank/re-circulation tank (1), a magnetic filter unit (2) with retractable magnets (8), a drain valve (3), a tank (4) for wash and elution, a vessel (5) for recovered and optionally new magnetic particles, an optical density sensor or sight hole (6), a pump (7), e.g. a peristaltic pump, a filter (9) e.g. a 0.22 µm filter for final purification of the eluate, a gas inlet (10) for example N2, for maintaining an oxygen free environment, an inlet (11) for rinse water for rinsing the magnetic filter unit, a valve (12) for discharging the eluate, a cell culture tank (13), and filter (14) for the removal of cells.

### Detailed description

Before the describing various aspects and embodiments in detail, it is to be understood that this description is not limited to particular compounds, configurations, process steps, substrates, and materials disclosed herein as such compounds, configurations, process steps, substrates, and materials may vary somewhat. It is also to be understood that the terminology employed herein is used for the purpose of describing particular embodiments only and is not intended to be limiting since the scope of the present embodiments is limited only by the appended claims.

It must be noted that, as used in this specification and the appended claims, the singular forms "a", "an" and "the" include plural referents unless the context clearly dictates otherwise.

Also, the term "about" is used to indicate a deviation of ± 10 %, and most preferably ± 5 % of the numeric values, where applicable.

If nothing else is defined, the scientific terminology including any terms used herein are intended to have the meanings commonly understood by those of skill in the art to which this disclosure pertains.

The inventors have carried out extensive research and found that the porous magnetic particles can be put to use in processes for separation of biomolecules, in particular large scale applications. The particles together with immobilized molecules and/or cells are easily separated using one or more external magnets. As the magnetic particles give added density to the particles the separation can be aided by centrifugation or by static settling using gravity. Density-based separation can be used as a pre-separation step and/or as part of the magnetic separation.

The inventors have tested different magnetic particles, and found that not all are suitable for the separation process and system disclosed herein. Many commercially available particles have too weak magnetic properties to be useful in the present process and system. The particles currently considered to be best suited are the particles produced by the inventors, using the process outlined herein. This process is also the subject of a co-pending application, claiming priority from SE 1351038-3, filed on September 9, 2013.

Examples of magnetic particles include the Mag Sepharose magnetic beads from GE Healthcare Life Sciences. Another example are the magnetic beads from Biovision, Inc. Yet another example, found to be very suitable in the current process and system, is the TurboBeads^{®} product range from Turbobeads LLC, Zürich, CH, available in both biomedical and chemical grade versions. All these beads are available in different qualities and with different functionalities.

Suitable magnetic particles can be roughly divided into three groups:
- Solid magnetic microparticles. These frequently have low magnetic force, and low capacity. They are currently less suitable for use in the process and system disclosed herein. Examples include Dynabeads^{®} (Dynal / Invitrogen Co.) and Micromer^{®} M (magnetic polystyrene particles from Micromod Partikeltechnologie GmbH, Rostock, Germany).
- Porous magnetic particles. These have good magnetic properties and high capacity. They are suitable for use in the process and system disclosed herein. Examples include the particles from GE Healthcare Life Sciences, Biovision, Inc, and particles produced as outlined in the present description and co-pending application.
- Solid magnetic particles, for example the Cobalt particles (TurboBeads^{®} product range from Turbobeads LLC, Zurich, CH) and similar, having high magnetic force.

According to one embodiment the porous particles are essentially spherical, however also other shapes are encompassed and the magnetic porous particles are not limited to any specific shape. All shapes are encompassed within the scope of the embodiments presented herein. The same applies to the magnetic particles.

According to the invention, the smallest diameter of at least 95 weight-% of all magnetic particles is larger than the average diameter of at least 95 % of the pores of the porous particles. According to one embodiment, the smallest average diameter of the magnetic particles is larger than 20 nm.

According to one embodiment, a magnetic porous particle for use in the present process and system comprises at least one selected from the group consisting of agarose, silica, cellulose, poly vinyl alcohols, polyethylene glycols, polystyrene, acrylates and derivatives thereof.

Preferably the magnetic particles comprise at least one magnetic material chosen from magnetic metals, magnetic metal alloys and magnetic oxides or combinations thereof. Non-limiting examples include iron, nickel, cobalt, gadolinium, neodymium and samarium, as well as oxides and alloys thereof.

Preferably the magnetic particles and have a density which is higher than the density of the non-magnetic particles. Thus the magnetic particles can be used to increase the density of the entire particles. This is useful when gravity or centrifugation is used as part of the separation step, for example as a step before or after the magnetic separation.

According to another embodiment of said first aspect, freely combinable with the above, the magnetic particle, preferably a porous magnetic particle, carries functional groups including at least one selected from the group consisting of -SH, -S-S-pyridin, -COOH, -NH2, -CHO, -OH, phenol, anhydride, epoxy, S-Au, amide, aminoethyl, dietylaminethyl, quaternary aminoethyl, carboxymethyl, phospho and sulphopropyl. These functional groups are suitable for the manufacture of magnetic particles, as they facilitate the coupling of magnetic ions, such as Fe and Ni to the particles. These functional groups can also be useful in different processes for separation, for example ion exchange.

According to a further embodiment, freely combinable with the above, the functional groups include at least one group selected from the group consisting of IDA (Iminodiacetate), TED (tris(carboxymethyl) ethylenediamine), CM-Asp (carboxymetylated aspartic acid), NTA (nitrilotriacetic acid), TREN (tris( 2 - aminoetyl) amine), DPA (dipicolylamine), hexylsulfido groups and EDTA (ethylenediamine tetraacetate. These functional groups are useful for example in applications involving hydrophobic interaction and immobilized metal affinity chromatography (IMAC).

According to yet a further embodiment, freely combinable with the above, the functional groups comprise at least one group selected from the group consisting of CnHm (1≤n≤20 4≤m≤42), phenol, thiophenol and mercaptopyridine. These groups are useful in applications involving for example hydrophobic separation and mixed mode separation.

According to a further embodiment, freely combinable with the above, the molecules adapted for molecular interaction is at least one selected from the group consisting of a protein, an antigen, an enzyme, an enzyme inhibitor, a cofactor, a hormone, a toxin, a vitamin, a glycoconjugate, a nucleic acid, and a carbohydrate. These groups are useful in applications involving, for example, bioaffinity based separation.

Importantly, the functional groups can be present either on a magnetic solid particle, attached to a porous particle, together creating a magnetic particle having sufficient surface, or present on a porous magnetic particle, or present on a porous, non-magnetic particle, which in turn carries magnetic particles bound thereto.

In another embodiment the porous particle comprises at least one selected from the group consisting of agarose, silica, cellulose, polyvinyl alcohols, polyethylene glycols, polystyrene, dextran and acrylates.

The magnetic particles comprise at least one magnetic material, for example but not limited to magnetic metals, magnetic metal alloys, and magnetic oxides or combinations thereof. In one embodiment the magnetic particles have a density which is higher than the density of the non-magnetic porous particle. The density is measured according to ISO 1183-1:2012. A molecule adapted for interaction is a molecule with the ability to interact with another molecule by means including but not limited to forming a bond with another molecule. Examples of materials in the magnetic particles (Mp) include but are not limited to magnetic metals, magnetic metal alloys, and magnetic oxides, such as iron, cobalt, and oxides thereof.

When magnetic particles are used, the separation can be performed by both a magnetic field or by using a difference in density. According to the invention, the magnetic particles are magnetic and have high density so that a separation based on a magnetic field and/or a separation based on a density difference can be used. A separation based on density includes centrifugation and/or exposure to gravity. Exposure to gravity may be to simply let the sample stand so that denser particles settle.

The process and system disclosed herein has many advantages. It can supplement or entirely replace conventional chromatography equipment, and offers a more robust and easily operated continuous or semi-continuous system. The through-put increases significantly as the herein described process and system can be operated without or with minimal pretreatment of the solutions, at much higher flow rates than conventional chromatography equipment. A process and system as disclosed herein is also less prone to interruptions, and needs less maintenance, for example as the problem of compaction chromatographic columns, the formation of channels in the media, the clogging of filters etc., can be avoided.

In general, the implementation of the process and system makes it possible to reduce the number of process steps and unit operations, making it possible to process larger batches at a lower cost and shorter time. The process is also easily scaled up, either by increasing the dimensions of the magnetic separation device or by using several magnetic separation devices in parallel. It is also possible to design sequential systems, recirculating the magnetic particles.

The process and system can serve as a platform, without restricting its use to capture of monoclonal antibodies. Other suitable uses are processes involving hydrophobic interaction, ion exchange or affinity chromatography. The process and system is non-destructive and suitable for handling large biomolecules and even living cells. Further, a system as disclosed here is easy to clean and suitable for processes requiring aseptic or even sterile environment. This makes it particularly suitable for pharmaceutical, biochemical and microbiological applications.

### Examples

### Example 1. Flow through processing - isolation of IgG with magnetic separation

Isolation of immunoglobulin G (IgG) from larger sample volumes, for example about 1 to 10 000 L, is performed by utilizing magnetic particles and a magnetic separator device included in a flow system setup. The setup includes a fermentor, where the IgG is produced and where the magnetic particles with an affinity for IgG are added in order to capture the produced IgG, followed by various containers for washing, elution and regeneration of the magnetic particles. The magnetic separator device is for example a magnetic filter in which the IgG loaded magnetic particles are captured and concentrated from large volumes of cell culture medium. A magnetic separator device as disclosed herein can process cell culture media and particles at flow rates of 1 to 1000L/min which makes it possible to handle large volumes of cell culture media in short time.

The magnetic separator device is also easily deactivated, for example by removing the magnets from the filter device or by automatic retraction of the magnets, thus making it possible to release the captured particles carrying the IgG. These are then processed further in a subsequent container or vessel, e.g. washed and eluated, releasing of the IgG from the magnetic particles. The IgG molecules are then separated from the magnetic particles by recirculating the mixture of particles and free IgG to the activated magnetic separation device where the magnetic particles are again captured. Consequently IgG molecules pass through the magnetic separation device and are collected in a separate container for further handling. The magnetic particles can then be recirculated to a new batch of IgG containing cell culture medium from the fermentor.

An example of a separating system according to an embodiment and such as the above described magnetic separator device included in a flow system setup is schematically illustrated in Fig. 5.

### Example 2. Large-scale separation of magnetic particles in a flow system setup

Approximately 200 ml settled magnetic particles was separated and concentrated from a 10 L PBS solution within 35 minutes utilizing a magnetic separator device included in a flow system setup at a flow-rate of 3 L/min.

The magnetic separator device included in a flow system setup included a magnetic separator device based on a commercial device (AutoMag Compact (AMC) from Eclipse Magnetics Ltd., Sheffield, UK). The AMC original magnetic filter was modified with two additional outlets in the bottom of the housing, corresponding to the drain valve, item 3 in Fig. 5, thus allowing a simplified draining of the device and resulting in an efficient recovery and concentration of the magnetic particles which were then recovered and recirculated in the process.

A 10 L cell culture/feed tank 1, a waste-container and 5 L container for collecting magnetic particles was connected as shown in Fig. 5, including the necessary additional tubing, valves, and connectors. In this experimental setup, the pump 7 was a peristaltic pump, operated at a flow capacity of at least 3 L/min.

Magnetic particles: 200 ml of settled magnetic particles was produced as described above. The process is of course applicable to other particles, such as commercially available particles provided that they exhibit sufficient magnetic force, and have the necessary affinity to the molecules to be captured.

The process as used in the experiment included the following steps: capture of magnetic particles, washing the captured magnetic particles and release and recovery of magnetic particles. These steps are further described below.

Preparation/cleaning of the magnetic separation system: Before the capture of the magnetic particles in the capture in the magnetic separator device and flow system setup, the device was cleaned with de-ionized water by adding 10 L of water and recirculating this for 15 minutes with a flow rate of 3 L/min before emptying the system.

Capturing of the magnetic particles: The magnetic particles were suspended in a 10 L solution of PBS and transferred to the 10 L cell culture/feed tank, item 1 in Fig. 5. The solution with magnetic particles was recirculated through the magnetic separator device with activated magnets, item 2 in Fig. 5, at a flow rate of 3 L/min. After 35 minutes of recirculation, the solution became clear, visually noticed by the disappearance of the black magnetic particles from the feed tank. Thus the magnetic particles were completely captured on the magnets in the magnetic separator device. The clear solution without the magnetic particles was then drained from the magnetic separator device into a waste container. This 10 L waste solution was inspected for magnetic particle losses. The solution was passed through a glass filter funnel where the magnetic particles were retained from the solution. Approximately 100 µl settled magnetic particles could be isolated from the waste solution. This corresponds to 0.05% of the initially added magnetic particles.

Wash of the captured magnetic particles: A 5 L PBS solution was then added to the cell culture/feed tank and flushed through the magnetic separator device to the outlet waste container. The flow rate was 3L/min. The magnets in the magnetic separator device were still activated to retain the particles in the device

Release and recovery of magnetic particles: The magnetic separator device, item 2 in Fig. 5, was then filled with PBS solution, volume approx. 2 L. Following this, the magnets in the magnetic separator device were deactivated, retracted from the filter, item 8 in Fig. 5, thus releasing the particles. The magnetic particles then sedimented to the bottom of the filter.

Then, drain valve at the bottom of the magnetic separator device housing, item 3 in Fig. 5, was opened in order to recover the magnetic particles from the magnetic separator device. The recovered magnetic particles were collected in a container together with the 2 L PBS solution.

The collected fraction was inspected to determine the amount of collected magnetic particles. A very high portion, 98 % of the magnetic particles, was found.

### Example 3. Binding and elution of immunoglobulins to Protein A

Magnetic particles were tested in a large-scale cell culture experiment, using a magnetic separator device included in a flow system setup. scale suitable 1000 grams or 10-1000 liter of cell culture, no specific filtration will be performed to remove cells from the cell culture. The particle may be removed from the system after processing a cell culture batch, alternatively, the magnetic particles may be stored in the system in a bacteriostatic solution.

The magnetic separator device included in a flow system setup was thoroughly cleaned using 10 liters of 1M NaOH solution. The solution was circulated in the system, bringing it in contact with all tubing, valves and components. The contact time was about 30 minutes to efficiently clean and sanitize the filter.

The magnetic separator device in a flow system setup, including all piping and the peristaltic pump, were rinsed with de-ionized pyrogen free water followed by a PBS buffer (phosphate buffered saline solution)

The cleaned magnetic separator device was then aseptically connected to a cell culture tank. The magnetic elements 8 are first retracted from the magnetic separator device, to eliminate the magnetic force and allowing the magnetic particles to pass through the device.

The content and concentration of antibody in a batch was determined by GPC-HPLC or by ELISA. The corresponding volume of cell culture to be added to the magnetic separator device was then calculated based on the result of the GPC-HPLC or ELISA.

Then the clean Protein A magnetic particles which were stored in an antibacterial solution and then equilibrated with PBS buffer (target amount of particles to allow binding of 30 mg/mL of settled particles) were added to the cell culture tank/re-circulation tank, and kept in suspension while circulating, looping the cell culture through the magnetic separator device and back to the cell culture/recirculation tank. The looping continues for about 30 minutes to achieve complete extraction of antibodies from the cell culture and complete adsorption of the antibodies to the magnetic particles.

Next, the magnets are activated to start the adhesion of magnetic particles to the magnets of the magnetic separator device. This to remove the magnetic particles with adsorbed antibodies to them from the cell culture.

The looping is now continued until the solution clears up, i.e all particles are captured including the adsorbed protein. The clearing up of the cell culture solution can be observed through a sight glass and an OD 500-600 nm sensor, item 6 in Fig. 5. The optical density measurement makes it possible to automate the process. Optical density monitoring sensors and systems are available from commercial providers, for example DASGIP Information and Process Technology GmbH, Germany.

Next the solution is drained from the magnetic separator device via the drain valve, item 3, followed by passing a rinse buffer through the system (PBS), volume 10 liters to waste, exit waste in the figure. This was done in order to efficiently remove the cell culture broth and cells from the magnetic separator device.

Next the magnets are retracted, to enable re-suspension of the particles. This is achieved by passing a PBS buffer through the magnetic separator device and recirculate it back to the wash tank. The PBS was added from the wash tank, volume about 10 liters. The recirculation, looping was continued for 15 minutes to release impurities (Host Cell Proteins (HCP), DNA, endotoxins etc) non-specifically bound to the magnetic particles via the Protein A ligand. Then the magnets are activated, and circulation is maintained until no particles can be observed in the solution by the OD sensor. The solution is then drained from the system. This step is repeated two more times.

Now the magnets are kept activated when adding elution buffer (citric acid 60 mM pH 3 or 100 mM amino acid buffer at pH 3 from the wash tank, item 4 in Fig. 5, and the volume of buffer is about 2 liters. Recirculation is started via the wash tank, item 4, through the pump, item 7, and returned to the wash tank, item 4, the magnets are deactivated, retracted. The circulation continues for about 15-20 minutes to efficiently eluate, releasing the antibody from the magnetic particles.

Next the magnets are activated, to enable removal of the particles from the solution containing eluted antibodies. The recirculation, looping, is discontinued when the solution is clear based on visual observation or as determined using the OD sensor.

The magnetic separator device is then pressurized using nitrogen (N₂) gas, pressure 0.5-1 bar, through the gas inlet valve, item10 in Fig. 5. All other valves are closed at this point. The eluate containing the antibodies is passed through the external 0.22 micron filter, item 9, by opening filtration valve , item 12, into a suitable clean external vessel, in order to efficiently remove particles and microorganisms from the antibody containing solution.

When the three previous steps have been performed for a total of about 30-45 minutes, a 1M Tris buffer, pH 7, is added to the eluate in the proportions 1 to 10 to neutralize the pH of the solution. The holding time together with the low pH serves as a potential viral inactivation step. This serves as a first viral inactivation step which is required for an antibody purification process when mammalian cells are used.

Recovery and cleaning of magnetic particles for re-use: The magnetic particles are kept adhered to the magnets of the filter and about 10 liters of a CIP buffer consisting of 60 mM citric acid, pH 3 is recirculated from the wash tank, recirculated back to the wash tank via the magnetic separation device, for about 15 minutes and then drained from the filter, waste exit

Next, 10 liters of PBS buffer supplemented with 0.5M NaCl and 1% Tween is recirculated, looped as in step 1 over the filter for about 15 minutes and then drained from the system.

Step 2 is repeated but now the magnets are retracted for 15 minutes so that the particles return into a suspension. Then the magnets are activated so that the particles are removed from the solution, as observed visually or based on the OD sensor signal. The solution is then drained from the system.

Then a bacteriostatic solution, volume about 10 liters, consisting of 10% v/v of ethyl or propyl alcohol is added to the wash tank, while removing the magnetic force, looped as in steps 1-2, in order to return the particles into a suspension again. After about 15 minutes, the magnets are activated again and the clear solution is drained off.

Then an additional bacteriostatic solution, volume 2 liters, is added to the filter and the magnets are inactivated. The released particles now sink to the bottom cone of the filter. A low pressure of nitrogen, 0.5-1 bar, is now applied onto the filter. The drain valve is slowly opened in order to empty the filter into a storage vessel. The particles are now stored in the bacteriostatic 20% ethanol solution at 2-8 °C until further use.

Alternatively, the magnetic particles are stored in a bacteriostatic solution in the filter until further use. When magnetic particles are re-used they will undergo control of possible microbial contamination and absence of endotoxin, for example using the LAL test (limulous amoebocyte lysate test, available from various commercial proividers, e.g. Lonza Group Ltd., CH).

### Example 4. Binding and elution of immunoglobulins to Protein A

Magnetic particles from a large-scale cell culture are processed in a magnetic separator device, in batches corresponding to about 1000 grams of product or 10-1000 liter of cell culture, following filtration performed to remove cells from the cell culture.

The filtered cell culture is added from a cell culture tank, corresponding to item 13 in Fig. 5, via a 0.22 micrometer filter, item 14, to a cell culture/re-circulation tank, item 1. All other steps are performed as described in Example 3

## Claims

1. A process for large scale separation of molecules comprising the steps:
- providing magnetic particles (P) having an affinity to said molecules to be separated,
- mixing said magnetic particles (P) with a solution containing said molecules,
- bringing said mixture in contact with a magnetic separation device comprising a flow channel and at least one magnetic element,
- removing said at least one magnetic element and collecting the magnetic particles (P) carrying said molecules,
- separating said molecules from said magnetic particles (P)
- obtaining a concentrated fraction of said molecules, and
- recirculating the magnetic particles (P),
wherein the magnetic particles (P) are particles having an exterior surface, pores and a connected interior surface defined by said pores, said particles (P) comprising at least one polymer, functional groups on said exterior and interior surfaces and magnetic particles (Mp) covalently bound to the interior and exterior surface of said particles (P), wherein the smallest diameter of at least 95wt% of all magnetic particles (Mp) is larger than the average diameter of at least 95% of the pores of the particles (P).

2. The process according to claim 1, wherein the magnetic particle (P) comprises a material selected from the group consisting of agarose, silica, cellulose, poly vinyl alcohols, polyethylene glycols, polystyrene, acrylates, and dextran.

3. The process according to any one of claims 1 - 2, wherein the magnetic particle (P) carries functional groups including at least one selected from the group consisting of -SH, -S-S-pyridin, -COOH, -NH₂, -CHO, -OH, phenol, anhydride, epoxy, S-Au, amide, aminoethyl, dietylaminethyl, quaternary aminoethyl, carboxymethyl, phospho and sulphopropyl.

4. The process according to any one of claims 1 - 2, wherein the magnetic particle (P) carries functional groups selected from the group consisting of IDA (Imminodiacetate), TED (tris(carboxymethyl) ethylenediamine), CM-Asp (carboxymetylated aspartic acid), NTA (nitrilotriacetic acid), TREN (tris( 2 - aminoetyl) amine), DPA (dipicolylamin), hexylsulfido groups and EDTA (Etylenediaminetetraacetate).

5. The process according to any one of claims 1 - 2, wherein the magnetic particle (P) carries at least one group selected from the group consisting of CnHm (1≤n≤20 4≤m≤42), phenol, thiophenol, and mercaptopyridine.

6. The process according to claim 5, wherein molecules adapted for molecular interactions are introduced on the magnetic particles (M), and wherein the molecules adapted for molecular interaction is at least one selected from the group consisting of a protein, a nucleic acid and a carbohydrate.

7. The process according to claim 5, wherein molecules adapted for molecular interactions are introduced on the magnetic particles (M), and wherein the molecules adapted for molecular interaction is at least one selected from the group consisting of an antigen, an enzyme, an enzyme inhibitor, a cofactor, a hormone, a toxin, a vitamin, and a glycoconjugate.

8. The process according to claim 1, wherein said magnetic separation device comprises a container, and wherein the magnetic element is applied to the outside of said container.

9. The process according to claim 1, wherein said magnetic separation device comprises a container, and wherein a hollow object is introduced into the mixture in said container, wherein said hollow shape has an exterior surface in contact with the mixture, and an interior volume into which a magnetic element is removably inserted.

10. The process according to claim 1, wherein said magnetic separation device comprises a flow channel, and wherein the magnetic element is applied to the outside of the flow channel.

11. A system for large scale separation of molecules comprising at least:
- a storage tank for storing magnetic particles (P) having an affinity to said molecules to be separated,
- a reactor for mixing said magnetic particles (P) with a solution containing said molecules,
- a magnetic separation device comprising a flow channel and at least one magnetic element, and
- a pump for transporting the mixture of magnetic particles (P) and solution containing said molecules,
wherein the magnetic particles (P) are particles having an exterior surface, pores and a connected interior surface defined by said pores, said particles (P) comprising at least one polymer, functional groups on said exterior and interior surfaces and magnetic particles (Mp) covalently bound to the interior and exterior surface of said particles (P), wherein the smallest diameter of at least 95wt% of all magnetic particles (Mp) is larger than the average diameter of at least 95% of the pores of the particles (P).

12. The system according to claim 11, further comprising an optical density sensor for optical density monitoring.

13. The system according to claim 11, further comprising a gas inlet for pressurizing the system with an inert gas.

## Patentansprüche

1. Verfahren zur großmaßstäblichen Separierung von Molekülen, umfassend die Schritte:
- Bereitstellen von magnetischen Partikeln (P), die eine Affinität zu den zu separierenden Molekülen haben,
- Mischen der magnetischen Partikel (P) mit einer Lösung, die die Moleküle enthält,
- Inkontaktbringen dieser Mischung mit einer magnetischen Separationsvorrichtung, die einen Strömungskanal und mindestens ein magnetisches Element umfasst,
- Entfernen des mindestens einen magnetischen Elements und Sammeln der magnetischen Partikel (P), die die Moleküle tragen,
- Separieren der Moleküle von den magnetischen Partikeln (P),
- Gewinnen einer konzentrierten Fraktion der Moleküle, und
- Rückführung der magnetischen Partikel (P),
wobei die magnetischen Partikel (P) Partikel sind, die eine äußere Oberfläche, Poren und eine durch die Poren definierte, verbundene innere Oberfläche haben, wobei die Partikel (P) mindestens ein Polymer, funktionelle Gruppen auf den äußeren und inneren Oberflächen und magnetische Partikel (Mp), die kovalent an die innere und äußere Oberfläche der Partikel (P) gebunden sind, umfassen, wobei der kleinste Durchmesser von mindestens 95 Gew.-% aller magnetischen Partikel (Mp) größer ist als der durchschnittliche Durchmesser von mindestens 95% der Poren der Partikel (P).

2. Verfahren nach Anspruch 1, wobei das magnetische Partikel (P) ein Material umfasst, das aus der Gruppe ausgewählt ist, die aus Agarose, Silika, Cellulose, Polyvinylalkoholen, Polyethylenglykolen, Polystyrol, Acrylaten und Dextran besteht.

3. Verfahren nach einem der Ansprüche 1-2, wobei das magnetische Partikel (P) funktionelle Gruppen trägt, einschließlich mindestens einer Gruppe, die ausgewählt ist aus der Gruppe bestehend aus -SH, -S-S-Pyridin, -COOH, -NH₂, -CHO, -OH, Phenol, Anhydrid, Epoxy, S-Au, Amid, Aminoethyl, Dietylaminethyl, quaternäres Aminoethyl, Carboxymethyl, Phospho und Sulfopropyl.

4. Verfahren nach einem der Ansprüche 1-2, wobei das magnetische Partikel (P) funktionelle Gruppen trägt, die ausgewählt sind aus der Gruppe bestehend aus IDA (Imminodiacetat), TED (Tris(carboxymethyl)ethylendiamin), CM-Asp (carboxymethylierte Asparaginsäure), NTA (Nitrilotriessigsäure), TREN (Tris(2-aminoethyl)amin), DPA (Dipicolylamin), Hexylsulfidogruppen und EDTA (Etylendiamintetraacetat).

5. Verfahren nach einem der Ansprüche 1-2, wobei das magnetische Partikel (P) mindestens eine Gruppe trägt, die ausgewählt ist aus der Gruppe bestehend aus CnHm (1≤n≤20 4≤m≤42), Phenol, Thiophenol und Mercaptopyridin.

6. Verfahren nach Anspruch 5, wobei Moleküle, die für molekulare Wechselwirkungen adaptiert sind, auf die magnetischen Partikel (M) aufgebracht werden, und wobei die Moleküle, die für molekulare Wechselwirkungen adaptiert sind, mindestens eines ist, das aus der Gruppe ausgewählt ist, die aus einem Protein, einer Nukleinsäure und einem Kohlenhydrat besteht.

7. Verfahren nach Anspruch 5, wobei Moleküle, die für molekulare Wechselwirkungen adaptiert sind, auf die magnetischen Partikel (M) aufgebracht werden, und wobei die Moleküle, die für molekulare Wechselwirkungen adaptiert sind, mindestens eines ist, das aus der Gruppe ausgewählt ist, die aus einem Antigen, einem Enzym, einem Enzyminhibitor, einem Kofaktor, einem Hormon, einem Toxin, einem Vitamin und einem Glykokonjugat besteht.

8. Verfahren nach Anspruch 1, wobei die magnetische Separationsvorrichtung einen Behälter umfasst und wobei das magnetische Element an der Außenseite des Behälters angewendet wird.

9. Verfahren nach Anspruch 1, wobei die magnetische Separationsvorrichtung einen Behälter umfasst und wobei ein hohler Gegenstand in das Gemisch in dem Behälter eingeführt wird, wobei die hohle Form eine äußere Oberfläche in Kontakt mit dem Gemisch und ein inneres Volumen aufweist, in das ein magnetisches Element entfernbar eingeführt wird.

10. Verfahren nach Anspruch 1, wobei die magnetische Separationsvorrichtung einen Strömungskanal umfasst und wobei das magnetische Element an der Außenseite des Strömungskanals angewendet wird.

11. System zur großmaßstäblichen Separierung von Molekülen, das mindestens umfasst:
- einen Vorratsbehälter zur Lagerung von magnetischen Partikeln (P), die eine Affinität zu den zu separierenden Molekülen aufweisen,
- einen Reaktor zum Mischen der magnetischen Partikel (P) mit einer Lösung, die diese Moleküle enthält,
- eine magnetische Separationsvorrichtung, die einen Strömungskanal und mindestens ein magnetisches Element umfasst, und
- eine Pumpe zum Transportieren des Gemischs aus magnetischen Partikeln (P) und der die Moleküle enthaltenden Lösung,
wobei die magnetischen Partikel (P) Partikel sind, die eine äußere Oberfläche, Poren und eine durch die Poren definierte, verbundene innere Oberfläche haben, wobei die Partikel (P) mindestens ein Polymer, funktionelle Gruppen auf den äußeren und inneren Oberflächen und magnetische Partikel (Mp), die kovalent an die innere und äußere Oberfläche der Partikel (P) gebunden sind, umfassen, wobei der kleinste Durchmesser von mindestens 95 Gew.-% aller magnetischen Partikel (Mp) größer ist als der durchschnittliche Durchmesser von mindestens 95% der Poren der Partikel (P).

12. System nach Anspruch 11, das ferner einen optischen Dichtesensor zur Überwachung der optischen Dichte umfasst.

13. System nach Anspruch 11, das ferner einen Gaseinlass zur Druckversorgung des Systems mit einem Inertgas umfasst.

## Revendications

1. Procédé pour une séparation à grande échelle de molécules comprenant les étapes :
- fournir des particules magnétiques (P) ayant une affinité avec lesdites molécules à séparer,
- mélanger lesdites particules magnétiques (P) avec une solution contenant lesdites molécules,
- mettre ledit mélange en contact avec un dispositif de séparation magnétique comprenant un canal d'écoulement et au moins un élément magnétique,
- retirer ledit au moins un élément magnétique et recueillir les particules magnétiques (P) portant lesdites molécules,
- séparer lesdites molécules desdites particules magnétiques (P),
- obtenir une fraction concentrée desdites molécules, et
- faire recirculer les particules magnétiques (P),
dans lequel les particules magnétiques (P) sont des particules ayant une surface extérieure, des pores et une surface intérieure connectée définie par lesdits pores, lesdites particules (P) comprenant au moins un polymère, des groupes fonctionnels sur lesdites surfaces extérieure et intérieure et des particules magnétiques (Mp) liées de manière covalente à la surface intérieure et extérieure desdites particules (P), dans lequel le plus petit diamètre d'au moins 95 % en poids de toutes les particules magnétiques (Mp) est plus grand que le diamètre moyen d'au moins 95 % des pores des particules (P).

2. Procédé selon la revendication 1, dans lequel la particule magnétique (P) comprend un matériau choisi dans le groupe constitué de l'agarose, de la silice, de la cellulose, des alcools polyvinyliques, des polyéthylèneglycols, du polystyrène, des acrylates et du dextrane.

3. Procédé selon l'une quelconque des revendications 1 et 2, dans lequel la particule magnétique (P) porte des groupes fonctionnels comportant au moins un groupe choisi dans le groupe constitué de -SH, -S-S-pyridine, -COOH, -NH₂, -CHO, -OH, phénol, anhydride, époxy, S-Au, amide, aminoéthyle, diéthylaminéthyle, aminoéthyle quaternaire, carboxyméthyle, phospho et sulfopropyle.

4. Procédé selon l'une quelconque des revendications 1 et 2, dans lequel la particule magnétique (P) porte des groupes fonctionnels choisis dans le groupe constitué de l'IDA (imminodiacétate), de la TED (tris(carboxyméthyl)éthylènediamine), du CM-Asp (acide aspartique carboxyméthylé), du NTA (acide nitrilotriacétique), de la TREN (tris(2-aminoéthyl)amine), de la DPA (dipicolylamine), des groupes hexylsulfido et de l'EDTA (éthylènediaminetétraacétate).

5. Procédé selon l'une quelconque des revendications 1 et 2, dans lequel la particule magnétique (P) porte au moins un groupe choisi dans le groupe constitué de CnHm (1≤n≤20 4≤m≤42), du phénol, du thiophénol et de la mercaptopyridine.

6. Procédé selon la revendication 5, dans lequel des molécules adaptées aux interactions moléculaires sont introduites sur les particules magnétiques (M), et dans lequel les molécules adaptées aux interactions moléculaires sont au moins une molécule choisie dans le groupe constitué d'une protéine, d'un acide nucléique et d'un hydrate de carbone.

7. Procédé selon la revendication 5, dans lequel des molécules adaptées aux interactions moléculaires sont introduites sur les particules magnétiques (M), et dans lequel les molécules adaptées aux interactions moléculaires sont au moins une molécule choisie dans le groupe constitué d'un antigène, d'une enzyme, d'un inhibiteur d'enzyme, d'un cofacteur, d'une hormone, d'une toxine, d'une vitamine et d'un glycoconjugué.

8. Procédé selon la revendication 1, dans lequel ledit dispositif de séparation magnétique comprend un récipient, et dans lequel l'élément magnétique est appliqué à l'extérieur dudit récipient.

9. Procédé selon la revendication 1, dans lequel ledit dispositif de séparation magnétique comprend un récipient, et dans lequel un objet creux est introduit dans le mélange dans ledit récipient, dans lequel ladite forme creuse a une surface extérieure en contact avec le mélange, et un volume intérieur dans lequel un élément magnétique est inséré de manière amovible.

10. Procédé selon la revendication 1, dans lequel ledit dispositif de séparation magnétique comprend un canal d'écoulement, et dans lequel l'élément magnétique est appliqué à l'extérieur du canal d'écoulement.

11. Système pour une séparation à grande échelle de molécules comprenant au moins :
- un réservoir de stockage pour stocker des particules magnétiques (P) ayant une affinité avec lesdites molécules à séparer,
- un réacteur pour mélanger lesdites particules magnétiques (P) avec une solution contenant lesdites molécules,
- un dispositif de séparation magnétique comprenant un canal d'écoulement et au moins un élément magnétique, et
- une pompe pour transporter le mélange de particules magnétiques (P) et de solution contenant lesdites molécules,
dans lequel les particules magnétiques (P) sont des particules ayant une surface extérieure, des pores et une surface intérieure connectée définie par lesdits pores, lesdites particules (P) comprenant au moins un polymère, des groupes fonctionnels sur lesdites surfaces extérieure et intérieure et des particules magnétiques (Mp) liées de manière covalente à la surface intérieure et extérieure desdites particules (P), dans lequel le plus petit diamètre d'au moins 95 % en poids de toutes les particules magnétiques (Mp) est plus grand que le diamètre moyen d'au moins 95 % des pores des particules (P).

12. Système selon la revendication 11, comprenant en outre un capteur de densité optique pour contrôler la densité optique.

13. Système selon la revendication 11, comprenant en outre une entrée de gaz pour mettre le système sous pression avec un gaz inerte.
